# EUROPÄISCHE PATENTANMELDUNG

(11) **EP 2 023 047 A2**
(43) Veröffentlichungstag der Anmeldung: **11.02.2009**
(21) Anmeldenummer: 08013810.0
(22) Anmeldetag: 01.08.2008
(51) Int. Cl.: F24D 3/08, F24D 3/18, F24D 12/02

(54) **Heizungsanlage**

(30) Priorität: 09.08.2007 DE 202007011120 U
(71) Anmelder: Robert Bosch GmbH, 70442 Stuttgart (DE)
(72) Erfinder: Gäbler, Wolfgang, 03149 Forst (DE); Lang, Jürgen, 12557 Berlin (DE)

(57) **Zusammenfassung**

Die Erfindung betrifft eine Heizungsanlage zur Erzeugung und Verteilung von Wärmeenergie für Zwecke der Raumheizung und/oder Trinkwarmwasserbereitung nach dem Oberbegriff des Schutzanspruches 1.

Aufgabe der vorliegenden Erfindung ist es, eine Heizungsanlage zu schaffen, die unabhängig von ihrer Rücklauftemperatur eine vollständige Kondensation der Abgasfeuchte und eine vollständige Brennwertnutzung möglich macht.

Der konstruktive Aufbau der Heizungsanlage zeichnet sich durch ein im Rücklaufstrang angeordnetes Kälteaggregat aus, das zum Entziehen von Wärmeenergie aus mindestens einem Teil des Rücklaufwassers dient. Dadurch sinkt die Temperatur in diesem Rücklaufwasser und in Folge auch die des Wärmetauscher-Brennwertbereichs unter den Abgastaupunkt.

## Beschreibung

Die Erfindung betrifft eine Heizungsanlage zur Erzeugung und Verteilung von Wärmeenergie für Zwecke der Raumheizung und/oder Trinkwarmwasserbereitung nach dem Oberbegriff des Schutzanspruches 1.

Eine Heizungsanlage dieser Art ist hinlänglich bekannt. Die Wärmeerzeugung erfolgt zumeist in einem Heizkessel auf Basis von Verbrennung gasförmiger, flüssiger oder fester Brennstoffe. Die Wärmeenergie der heißen Verbrennungsabgase (Heizgase) wird in einem Heizgas/Wasser-Wärmetauscher auf das Kessel- bzw. Heizungswasser übertragen. In einem Vorlaufstrang wird das heiße aus dem Heizkessel kommende Vorlaufwasser den Wärmeverbrauchern zugeführt - dies können Raumheizkörper in Gebäuden und/oder eine Trinkwarmwasseranlage sein. In einem Rücklaufstrang wird das kühlere von den Wärmeverbrauchern zurückströmende Rücklaufwasser zurück zum Heizkessel geführt. Eine Umwälzpumpe fördert das Heizungswasser im Kreis durch die Heizungsanlage. Zwischen Vorlaufstrang und Rücklaufstrang kann eine Bypass-Leitung mit Dreiwege-Mischer geschaltet sein. Je nach Einbauort der Umwälzpumpe und Stellung des Dreiwege-Mischers ermöglicht das eine Umwälzung des Heizungswassers entweder nur durch die Anlage und am Heizkessel vorbei oder auch eine Umwälzung des Heizungswassers nur durch den Heizkessel oder eine Umwälzung mit Beimischung (Zwischenstellung des Mischers).
Moderne Heizkessel nutzen seit etwa den 1980er Jahren vielfach das Brennwertprinzip. Im Vergleich zum konventionellen Heizwertprinzip liegen die Wirkungsgrade um etwa 10 % höher. Dafür werden die Verbrennungsabgase im Heizgas/Wasser-Wärmetauscher bis unter ihre Taupunkttemperatur von etwa 55 °C abgekühlt, sodass die den Abgasen eigene Abgasfeuchte kondensiert. Bei der Kondensation wird die Verdampfungsenthalpie freigesetzt, auf das Heizungswasser übertragen und somit nutzbar gemacht. In der Nähe des Brenners sind die Verbrennungsabgase und der Wärmetauscher noch sehr heiß, eine Kondensation ist hier noch nicht möglich. Auf ihrem weiteren Strömungsweg durch den Wärmetauscher kühlen die Abgase immer mehr ab. Bei üblicher Wärmetauscherauslegung erreicht und unterschreitet die Abgastemperatur nach etwa drei Viertel des Strömungsweges den Taupunkt. Die Voraussetzung für die Unterschreitung der Taupunkttemperatur, die Kondensation und damit für die Brennwertnutzung ist, dass das Rücklaufwasser kalt genug ist, um den Wärmetauscher entsprechend abzukühlen. Gemäß dem Kondensationsgrad kann man den Heizgas/Wasser-Wärmetauscher in zwei Bereiche unterteilen: Den brennernahen und trockenen Heizwertbereich und den kühleren und kondensatfeuchten Brennwertbereich.
Zwei grundlegende Kesselbauweisen sind hier zu unterscheiden, die integrierte und die baulich getrennte. Bei integrierten Wärmetauschern sind der Heizwert- und der Brennwertbereich zu einer baulichen Einheit zusammengefasst, während bei der baulich getrennten Variante sich ein separater, hydraulisch nachgeschalteter Brennwertwärmetauscher an den Heizwertwärmetauscher anschließt.
Eine häufige Ursache für unvollständige Brennwertnutzung sind zu hohe Temperaturen des Rücklaufwassers. Hierbei wird der Brennwertbereich des Wärmetauschers nicht tief genug gekühlt, die Abgase kondensieren nicht oder nur geringfügig, wodurch die Verdampfungsenthalpie nicht oder nur geringfügig zurückgewonnen werden kann. Hohe Rücklauftemperaturen ergeben sich unter anderem bei falscher Einstellung der Heizkesselregelung, oder auch in Abhängigkeit des gewählten Betriebsmodus oder der Gebäude-Außentemperatur.

Aufgabe der vorliegenden Erfindung ist es, eine Heizungsanlage zu schaffen, die unabhängig von ihrer Rücklauftemperatur eine vollständige Kondensation der Abgasfeuchte und eine vollständige Brennwertnutzung möglich macht.

Erfindungsgemäß wird dies mit den Merkmalen des Schutzanspruches 1 gelöst. Vorteilhafte Weiterbildungen sind den Unteransprüchen zu entnehmen.
Der konstruktive Aufbau der Heizungsanlage zeichnet sich durch ein im Rücklaufstrang angeordnetes Kälteaggregat aus, das zum Entziehen von Wärmeenergie aus mindestens einem Teil des Rücklaufwassers dient. Dadurch sinkt die Temperatur in diesem Rücklaufwasser und in Folge auch die des Wärmetauscher-Brennwertbereichs unter den Abgastaupunkt.
In einer Ausführungsform teilt sich der Rücklaufstrang (Temperatur T_{RA}) an einem stetig regelbaren Stellelement (Dreiwege-Mischer) auf und gliedert sich in einen Heizwert-Rücklaufstrang für einen Heizwert-Teilstrom und in einen Brennwert-Rücklaufstrang für einen Brennwert-Teilstrom. Das Kälteaggregat ist dann im Brennwert-Rücklaufstrang angeordnet und entzieht dem Brennwert-Teilstrom Wärmeenergie. Heizwert- und Brennwert-Rücklaufstrang werden am Heizgas/Wasser-Wärmetauscher wieder zusammengeführt, hierfür weist der Wärmetauscher zwei Rücklaufanschlüsse auf: Ein erster Rücklaufanschluss liegt im Heizwertbereich des Wärmetauschers, hier wird der den Heizwert-Teilstrom (Temperatur T_{RK1}) führende Heizwert-Rücklaufstrang angeschlossen; ein zweiter Rücklaufanschluss liegt im Brennwertbereich des Wärmetauschers und dient dem Anschluss des den Brennwert-Teilstrom (Temperatur T_{RK2}) führenden Brennwert-Rücklaufstranges. Der kalte Brennwert-Teilstrom (T_{RK2} « T_{RK1}) kühlt beim Durchströmen des Wärmetauscher-Brennwertbereiches diesen Bereich unter den Abgastaupunkt ab. Im Heizwertbereich vereinigen sich Brennwert-Teilstrom und Heizwert-Teilstrom wieder und fließen nun gemeinsam durch den restlichen Wärmetauscher.
Bei einer zweckmäßigen Ausführungsvariante wird das Kälteaggregat von einer Wärmepumpe gebildet, die dem Brennwert-Teilstrom im Verdampfer Wärme entzieht, wodurch dessen Temperatur auf T_{W4} sinkt. Der kalte Brennwert-Teilstrom wird dem Brennwertbereich des Heizgas/Wasser-Wärmetauschers mit der Temperatur T_{RK2} zugeführt und senkt dessen Temperatur derart, dass die den Brennwertbereich durchströmenden feuchten Verbrennungsabgase effektiv abgekühlt werden und auskondensieren. Die dem Brennwert-Teilstrom entzogene Wärme wird dem Heizwert-Teilstrom im Wärmepumpen-Kondensator zuführt, wodurch nun dessen Temperatur auf T_{W2} steigt. Die Volumenstromaufteilung auf die beiden Rücklauf-Teilstränge wird so gewählt, dass der Brennwert-Teilstrom so klein wie möglich ausfällt bei Gewährleistung der vollen Kondensation des feuchten Abgases im Brennwertbereich des Wärmetauschers. Mit dieser Wahl wird der Heizwert-Teilstrom entsprechend groß. Im Ergebnis kann dann eine Wärmepumpe mit nur geringer Anschlussleistung verwendet werden, da nur der kleine Brennwert-Teilstrom abgekühlt werden muss. Die Erwärmung des Heizwert-Teilstroms bleibt damit sehr gering (Temperatur T_{RK1} > T_{RA}) und fällt hinsichtlich seines Abkühlvermögens bezüglich des Heizgasstroms im Wärmetauscher kaum ins Gewicht.
Es ist zweckmäßig, wenn der Heizwert-Rücklaufstrang über eine parallel zum Kondensator angeordnete Bypass-Leitung mit Drosselventil verfügt, mit dem der Volumenstrom des über den Kondensator fließenden Heizwert-Teilstromes eingestellt werden kann.
Weiter ist es zu empfehlen, zum entsprechenden Zweck auch im Brennwert-Rücklaufstrang eine parallel zum Verdampfer angeordnete Bypass-Leitung vorzusehen. Eine für den ordnungsgemäßen Betrieb der Wärmepumpe erforderliche Temperatur T_{W3} und ein erforderlicher Volumenstrom des den Verdampfer durchströmenden Rücklaufwassers unterliegen bestimmten Grenzen, die eingehalten werden müssen. Hierzu wird die Bypass-Leitung mit einem stetig regelbaren Stellelement (Dreiwege-Mischer) parallel angeschlossen. Bei Verwendung einer Umwälzpumpe auf der Wärmequellenseite der Wärmepumpe (Brennwert-Rücklaufstrang) wird so eine Beimischung von bereits abgekühltem Rücklaufwasser (T_{W4}) zum noch nicht abgekühlten Rücklaufwasser (T_{RA}) und damit eine Einhaltung der zulässigen Temperatur- und Volumenstromgrenzen möglich. Zur einfacheren hydraulischen Einbindung der Wärmepumpe kann eine zusätzliche parallele Bypass-Leitung mit Rückschlagklappe vorgesehen sein.
Anstelle einer oder beider letztgenannten Bypass-Leitungen ist auch die Integration eines ebenfalls parallel zum Verdampfer angeordneten Pufferspeichers denkbar. Dieser bietet die zusätzliche Möglichkeit, den Wärmepumpenbetrieb zeitlich weitgehend unabhängig vom Kesselbetrieb zu gestalten. So kühlt die Wärmepumpe - sobald der Brenner des Heizkessels außer Betrieb geht - ein im Brennwert-Rücklaufstrang gepuffertes Rücklaufwasser-Volumen auf Vorrat ab. Schaltet der Brenner wieder ein, muss die Wärmepumpe nicht sofort wieder in Betrieb gehen, sondern es wird dann zunächst das kalte Pufferspeicherwasser in den Brennwertbereich des Wärmetauschers gefördert.
Alle oder einige der vorgenannten Komponenten der Heizungsanlage wie Heizkessel mit Heizgas/Wasser-Wärmetauscher, Teile des Vorlaufstranges, Teile des Rücklaufstranges, die Umwälzpumpe, das Stellelement (Dreiwege-Mischer) zum Aufteilen des Rücklaufstranges, der Heizwert-Rücklaufstrang, der Brennwert-Rücklaufstrang und das Kälteaggregat können zu einem kompakten, eine bauliche Einheit bildenden Heizgerät zusammengefasst sein.

Mit dieser Erfindung wird eine Heizungsanlage mit Gas-, Öl- oder Festbrennstoff-gefeuertem Brennwertheizkessel geschaffen, die bei allen Betriebszuständen und unabhängig von der Temperatur des Rücklaufwassers die Vollkondensation der Verbrennungsabgase erreicht und den zusätzlichen Brennwerteffekt nutzt.

Die Zeichnung stellt in drei Figuren schematische Ausführungsbeispiele der Erfindung dar.

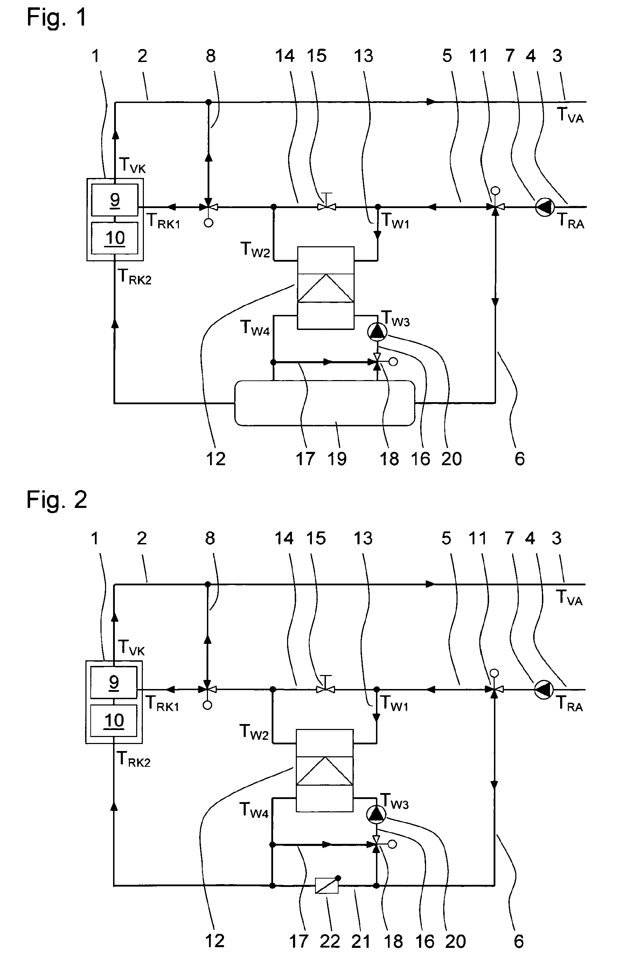

Gemäß Figur 1 umfasst die Heizungsanlage einen Heizkessel 1, einen Vorlaufstrang 2, 3 für die Zuführung von heißem Vorlaufwasser (Temperatur T_{VK} bzw. T_{VA}) aus dem Heizkessel 1 zu einem nicht dargestellten Wärmeverbraucher, einen Rücklaufstrang 4, 5, 6 für die Rückführung von kühlerem Rücklaufwasser (T_{RA}) vom Wärmeverbraucher zurück zum Heizkessel 1, eine Umwälzpumpe 7 zum Umwälzen des Vorlauf- und Rücklaufwassers und eine Bypass-Leitung 8 zwischen Vorlaufstrang 2, 3 und Rücklaufstrang 4, 5. Ein Heizgas/- Wasser-Wärmetauscher im Heizkessel 1 gliedert sich in einen Heizwertbereich 9 und in einen Brennwertbereich 10. Der Brennwertbereich 10 ist hydraulisch in den Heizkessel 1 integriert und bildet mit dem Heizwertbereich 9 eine bauliche Einheit, den Heizgas/Wasser-Wärmetauscher. Der Rücklaufstrang 4 teilt sich an einem stetig regelbaren Stellelement 11 (Dreiwege-Mischer) auf und bildet zwei Rücklauf-Teilstränge, einen Heizwert-Rücklaufstrang 5 für einen Heizwert-Teilstrom und einen Brennwert-Rücklaufstrang 6 für einen Brennwert-Teilstrom. Der Heizgas/Wasser-Wärmetauscher weist zwei Rücklaufanschlüsse auf: Einen ersten Rücklaufanschluss im Heizwertbereich 9 für den den Heizwert-Teilstrom (T_{RK1}) führenden Heizwert-Rücklaufstrang 5, und einen zweiten Rücklaufanschluss im Brennwertbereich 10 für den den Brennwert-Teilstrom (T_{RK2}) führenden Brennwert-Rücklaufstrang 6. Zwischen dem Heizwert-Rücklaufstrang 5 und dem Brennwert-Rücklaufstrang 6 ist eine Wärmepumpe 12 mit Wärme aufnehmendem Verdampfer und Wärme abgebendem Kondensator angeordnet, die dem Brennwert-Teilstrom Wärme entzieht und dem Heizwert-Teilstrom Wärme zuführt. Parallel zu einem Leitungsabschnitt 13 des Heizwert-Rücklaufstranges 5, der über den Kondensator geführt ist, ist eine Bypass-Leitung 14 mit Drosselventil 15 angeordnet. Auf der Seite des Brennwert-Rücklaufstranges 6 ist parallel zu einem über den Verdampfer geführten Leitungsabschnitt 16 eine Bypass-Leitung 17 mit stetig regelbarem Stellelement 18 (Dreiwege-Mischer) und ein parallel angeordneter Pufferspeicher 19 angeordnet. Der Leitungsabschnitt 16 verfügt über eine Umwälzpumpe 20.

Die Heizungsanlage in Figur 2 unterscheidet sich von jener in Figur 1 dadurch, dass im Brennwert-Rücklaufstrang 6 auf die Pufferung von kaltem Rücklaufwasser verzichtet wird. Zur Vereinfachung der hydraulischen Einbindung der Wärmepumpe ist eine Bypass-Leitung 21 mit Rückschlagklappe 22 vorgesehen.

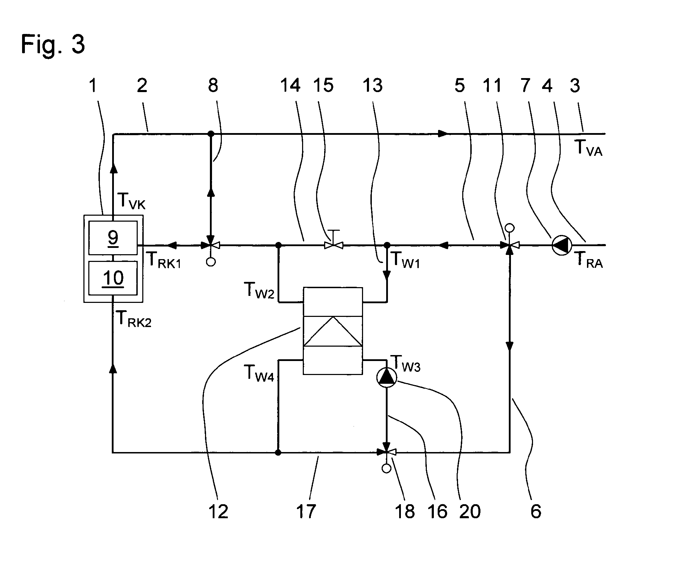

Die Heizungsanlage in Figur 3 ist weiter vereinfacht, hier ist neben dem Pufferspeicher 19 auch die Bypass-Leitung 21 und das Drosselventil 22 weggefallen. Der hydraulische Abgleich und die Einhaltung der zulässigen Temperaturen und Volumenströme am Wärmepumpen-Verdampfer werden nur noch mit Dreiwege-Mischer 18 und Umwälzpumpe 20 gewährleistet.

## Patentansprüche

1. Heizungsanlage zur Erzeugung und Verteilung von Wärmeenergie für Zwecke der Raumheizung und/oder Trinkwarmwasserbereitung, umfassend einen Heizkessel (1) zur Verbrennung von gasförmigen, flüssigen oder festen Brennstoffen mit einem Heizgas/Wasser-Wärmetauscher; einen Vorlaufstrang (2, 3) für die Zuführung von heißem Vorlaufwasser aus dem Heizkessel (1) zu einem Wärmeverbraucher; einen Rücklaufstrang (4) für die Rückführung von kühlerem Rücklaufwasser vom Wärmeverbraucher zurück zum Heizkessel (1); eine Umwälzpumpe (7) zum Umwälzen des Vorlauf- und Rücklaufwassers; und eine Bypass-Leitung (8) zwischen Vorlaufstrang (2, 3) und Rücklaufstrang (4); wobei der Heizgas/Wasser-Wärmetauscher sich in einen Heizwertbereich (9) und in einen Brennwertbereich (10) gliedert und der Brennwertbereich (10) hydraulisch integriert oder nachgeschaltet ist,
**dadurch gekennzeichnet, dass** im Rücklaufstrang (4) ein Kälteaggregat (12) zum Entziehen von Wärmeenergie aus mindestens einem Teil des Rücklaufwassers angeordnet ist.

2. Heizungsanlage nach Anspruch 1,
**dadurch gekennzeichnet, dass** sich der Rücklaufstrang (4) an einem stetig regelbaren Stellelement (11) (Dreiwege-Mischer) teilt und in einen Heizwert-Rücklaufstrang (5) für einen Heizwert-Teilstrom und einen Brennwert-Rücklaufstrang (6) für einen Brennwert-Teilstrom gliedert, wobei das Kälteaggregat (12) im Brennwert-Rücklaufstrang (6) angeordnet ist und dem Brennwert-Teilstrom Wärmeenergie entzieht.

3. Heizungsanlage nach Anspruch 1 oder 2,
**dadurch gekennzeichnet, dass** der Heizgas/Wasser-Wärmetauscher zwei Rücklaufanschlüsse aufweist, wobei ein erster Rücklaufanschluss im Heizwertbereich (9) für den den Heizwert-Teilstrom führenden Heizwert-Rücklaufstrang (5), und ein zweiter Rücklaufanschluss im Brennwertbereich (10) für den den Brennwert-Teilstrom führenden Brennwert-Rücklaufstrang (6) vorgesehen sind.

4. Heizungsanlage nach einem der Ansprüche 1 bis 3,
**dadurch gekennzeichnet, dass** das Kälteaggregat (12) von einer Wärmepumpe (12) gebildet ist, die dem Brennwert-Teilstrom Wärme entzieht und dem Heizwert-Teilstrom Wärme zuführt.

5. Heizungsanlage nach einem der Ansprüche 1 bis 4,
**dadurch gekennzeichnet, dass** ein über einen Wärme abgebenden Kondensator der Wärmepumpe (12) geführter Leitungsabschnitt (13) des Heizwert-Rücklaufstranges (5) eine parallel angeordnete Bypass-Leitung (14) mit Drosselventil (15) aufweist.

6. Heizungsanlage nach einem der Ansprüche 1 bis 5,
**dadurch gekennzeichnet, dass** ein über einen Wärme aufnehmenden Verdampfer der Wärmepumpe (12) geführter Leitungsabschnitt (16) des Brennwert-Rücklaufstranges (6) eine parallel angeordnete Bypass-Leitung (17) mit stetig regelbarem Stellelement (18) (Dreiwege-Mischer) und/oder eine parallel angeordnete Bypass-Leitung (21) mit Rückschlagklappe (22) und/oder einen parallel angeordneten Pufferspeicher (19) aufweist.

7. Heizungsanlage nach einem der Ansprüche 1 bis 6,
**dadurch gekennzeichnet, dass** der über einen Wärme aufnehmenden Verdampfer der Wärmepumpe (12) geführte Leitungsabschnitt (16) des Brennwert-Rücklaufstranges (6) eine Umwälzpumpe (20) aufweist.

8. Heizungsanlage nach einem der Ansprüche 1 bis 7,
**dadurch gekennzeichnet, dass** der Heizkessel (1) mit Heizgas/Wasser-Wärmetauscher, Teile des Vorlaufstranges (2, 3), Teile des Rücklaufstranges (4), die Umwälzpumpe (7), das Stellelement (11), der Heizwert-Rücklaufstrang (5), der Brennwert-Rücklaufstrang (6) und das Kälteaggregat (12) zu einem eine bauliche Einheit bildenden Heizgerät zusammengefasst sind.
